# EUROPEAN PATENT SPECIFICATION

(11) **EP 0 525 543 B1**
(45) Date of publication and mention of the grant of the patent: **13.01.1999**
(21) Application number: 92112237.0
(22) Date of filing: 17.07.1992
(51) Int. Cl.: G06F 15/80

(54) **Neural processor device**
Neuronal Prozessorgerät
Dispositif neuronal du traitement de données

(30) Priority: 02.08.1991 JP 217955/91
(43) Date of publication of application: 03.02.1993
(73) Proprietor: YOZAN INC., Tokyo 155 (JP); SHARP KABUSHIKI KAISHA, Osaka-shi, Osaka-fu 545 (JP)
(72) Inventor: Wongwarawipat, Wiwat, c/o EZEL ROBOT VISION Inc., Tokyo 155 (JP); Yamamoto, Makoto, c/o EZEL ROBOT VISION Inc., Tokyo 155 (JP)
(74) Representative: Grünecker, Kinkeldey, Stockmair & Schwanhäusser Anwaltssozietät

(56) References cited:
- US-A- 4 858 177
- 6TH MEDITERRANEAN ELECTROTECHNICAL CONFERENCE vol. 1 , 22 May 1991 , LJUBLJANA , SLOVENIA , YUGOSLAVIA pages 307 - 310 CASTILLO 'Digital VLSI implementation of a neural processor'
- IJCNN-91 INTERNATIONAL JOINT CONFERENCE ON NEURAL NETWORKS vol. 1 , 8 July 1991 , SEATTLE , USA pages 575 - 580 MEANS 'piriform model execution on a neurocomputer'
- VLSI FOR ARTIFICIAL INTELLIGENCE 1989 , LONDON , GB pages 255 - 264 BLAYO 'A VLSI systolic array dedicated to Hopfield neural network'

## Description

### FIELD OF THE INVENTION

The present invention relates to a neural processor device which calculates a summation of a plural number of weighted data and evaluates whether the value of the summation is large or small, said neural processor device comprising computational means for outputting the evaluation as an output data, an input port for inputting the input data above, and an output port for outputting the output data above.

### BACKGROUND OF THE INVENTION

An information processing system based on the concept of neural network has not realized yet the optimal design for use. Actually, weights are calculated by back propagation, and the setting of the number of neurons, layers and so forth is calculated according to experience with respect to rather small system. A lot of study and investment is necessary to implement a neural network by hardware and calculating the corresponding number of neurons and the number of layers. On the other hand when the neural network is implemented by software, it takes a long time until the result is obtained.

Document 6TH MEDITERRANEAN ELECTROTECHNICAL CONFERENCE, vol.1, 22 May 1991, LJUBLJANA, SLOVENIA, YUGOSLAVIA, pages 307-310, CASTILLO 'Digital VLSI implementation of a neural processor' describes a digital neural processor based on a VLSI architecture. Each processor is an element of a systolic array capable of performing the back propagation algorithm. The processor comprises an arithmetic unit, a communications unit a memory unit and a control unit. With regard to the communications each processor has three ports. East and West ports are unidirectional, white the north port is bidirectional in nature.

The arithmetic unit comprises basically an adder and a multiplier. The memory unit consists of a RAM which stores weight values and also the weight increments when in learning mode. A ROM implements the non-linear function.

This modular architecture executes the back propagation algorithm with less connections demand between processors.

### SUMMARY OF THE INVENTION

The present invention solves the above problems and has as an object to provide an IC or IC module for implementing any neural network structure.

The invention relates to a neural processor device according to the present invention comprises an input data output port for outputting at least a part of input data, an input data input port independent of an input port for inputting at least a part of input data, a summation input port for inputting data in addition to the summation of weighted input data, and a summation output port for outputting the summation. It realized to integrate, to divide, to use commonly input data, and to integrate and use commonly the summation.

It is possible to implement an unrestricted network structure by hardware easily by means of the neural processor device according to the present invention.

### PREFERRED EMBODIMENT OF THE PRESENT INVENTION

Hereinafter, an embodiment of the neural device according to the present invention is described with reference to the attached drawings.

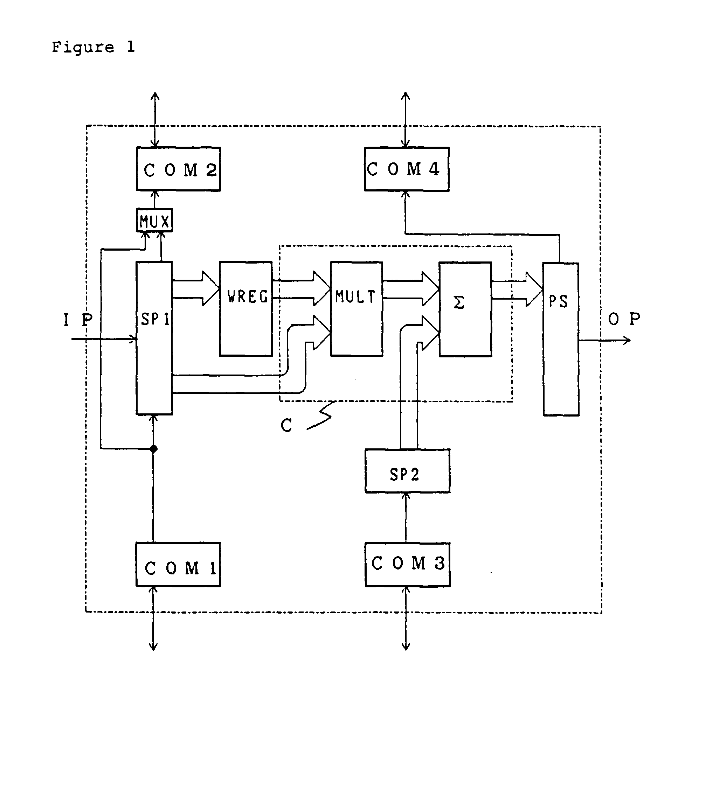

Figure 1 shows a block diagram of a neural device which comprises an input port IP for inputting an input data, an output port OP for outputting an output data, and a computation means "C" for calculating the summation of weighted input data and evaluating whether the summation is large or small.

Input port IP comprises converting means SP1 for converting serial data to parallel data and also converting parallel data to serial data, which can store the converted data. The output of SP1 is input to computational means "C", and is connected to weight register WREG. Input port IF is used for inputting weight data as well as input data. The data of SP1 can be transmitted to WREG by changing WREG into writing mode storing weight data in SP1. Weight input data is totally summed and it is evaluated whether it is large or small by inputting both data to computational portion "C" in the state that weighted data is stored in WREG and input data is stored in SP1.

Computational portion "C" comprises multiplication means "MULT" and accumulation means "Σ": multiplication means MULT multiplies input data by weight data corresponding to the input data, and outputs the multiplied result into the sequential accumulation means "Σ". Accumulation means "Σ" sequentially accumulates the multiplied result and calculates the summation. Weighted data is to be the data with a sign. It is regarded fired when the accumulated result in the accumulation means is plus. In this processing, the threshold is "0". The circuit in the embodiment is simplified by omitting subtraction circuit.

Once the output of computational means "C" is stored in converting means "PS", it is converted from parallel data into serial data in output port, and it is output to the outside as serial data.

In this way, the size of data can be changed according to the inner structure and the network can be free to be structured by setting input and output data serial data.

The neural device comprises four serial communication ports from COM1 to COM4 in addition to input port IF and output port OP. COM1 is used for inputting data to SP1 and COM2 is used for outputting from SP1. The input of COM1 branches to output side of SP1. Multiplexer "MUX" selects the input from COM1 and output of SP1.

With respect to input data, the data from IP and COM1 can be integrated in SP1, and all of or a part of data from IP can be output to outside. It is also possible to output the data of COM1 through COM2 as it is. Therefore, it is possible to make an input datum for the neural device integrated input data from IP and COM1, and also possible to device or use in common the input data.

Various network structures with a plural number of neural devices can be realized in more flexible way as to the data integration, division and common use. It is described later in detail.

By means of communication port COM3 serial data are inputted into serial/parallel converter SP2, which inputs the parallel data in accumulation means "Σ" placed in computational means "C". It means that computational means "C" can integrate two types of data.

Communication port COM4 transmits the data of PS, that is, the output of computational means "C" to the outside. It makes possible to use in common the data of computational means "C".

This integration and common use of data is also effective to structure a neural network in more flexible way.

The examples of the structure of network comprised of neural devices are described below.

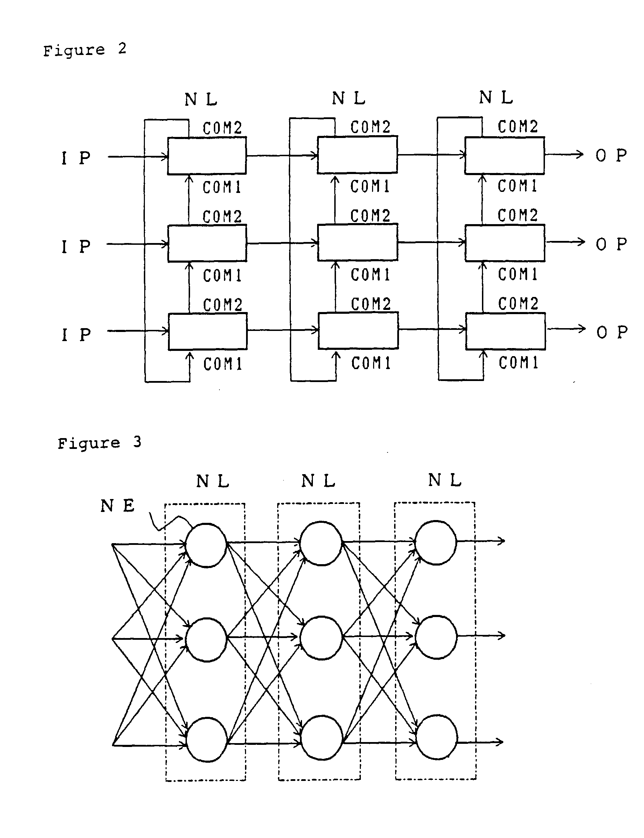

Figure 3 shows the structure in which a plural number of layers "NL" each having the same number of neurons "NE" is settled in series. A plural number of neural devices is connected as shown in Figure 2 in order to implement a network structure as shown in Figure 3. In Figure 2, settling the same number of neural devices as neurons, the output of each neural device COM2 is input to other neural devices COM1. Consequently, all of input data is integrated and output in each neural device.

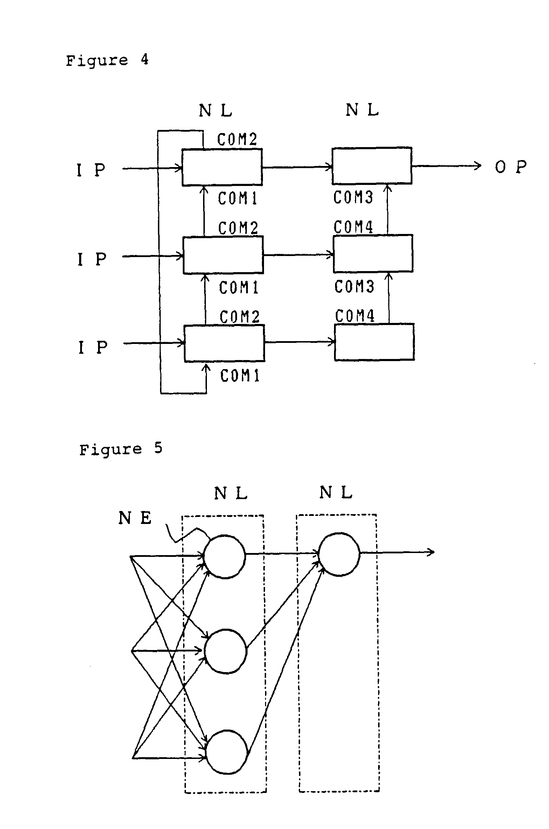

Figure 5 shows the network in which the output of a plural number of neurons is connected to one neuron in the second layer. It also shows the connection of neural devices corresponding to Figure 4.

In the first layer, the output of each neural device COM2 is input to other devices COM1 in order to integrate all the input data in each neuron. In the second layer, the data of neural device COM4 is sequentially transmitted to COM3 in order to integrate the output of the first layer, and finally it is integrate in the last neural device (the neural device at the top).

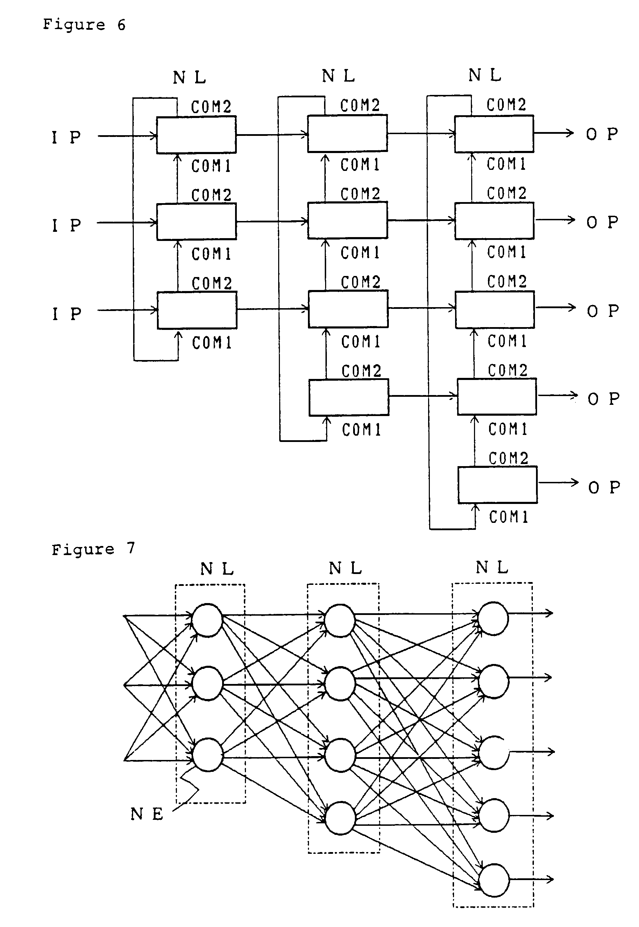

Figure 7 shows a network for progressively enlarging the number of the input data. Figure 6 shows the connection of neural devices corresponding to the network in Figure 7.

In each layer, the output of each neural device COM2 is input to other neural devices COM1 because all the input data is necessary to be integrated in each neuron. OF of the neural device in each layer is input to the corresponding neuron in the following layer.

As described, it is possible to realize various kinds of network structure by changing the connection of neural devices. As each neural device is structured by IC or IC module, high speed processing and effective simulation can be performed. The wiring is easy because the connection among neural devices is very simple.

As mentioned above, the neural processor device according to the present invention comprises an input data output port for outputting at least a part of input data, an input data input port independent of an input port for inputting at least a part of input data, a summation input port for inputting data in addition to the summation of weighted input data, and a summation output port for outputting the summation. It is realized to integrate, to divide, to use in common input data, and to integrate and use in common the summation. Therefore, it is possible to implement a network structure in a more flexible way by hardware.

### BRIEF DESCRIPTION OF THE DRAWINGS

Figure 1 shows a block diagram of an embodiment of the neural device according to the present invention.

Figure 2 shows a block diagram to disclose an example of the connection of devices with respect to the embodiment.

Figure 3 shows a conceptual diagram of a neural network corresponding to the connection in Figure 2.

Figure 4 shows a block diagram of another example of the connection of devices with respect to the same embodiment.

Figure 5 shows a conceptual diagram of a neural network corresponding to the connection in Figure 4.

Figure 6 shows a block diagram of another example of the connection of devices than that in Figure 4 with respect to the same embodiment.

Figure 7 shows a conceptual diagram of a neural network corresponding to the connection in Figure 6.

"C" shows a computational means, "IP" shows an input port, "OP" shows an output port, "SP" shows a converter which converts serial data into parallel data and parallel data into serial data, "COM1" shows a communication port (input data input port), "COM2" shows a communication port (input data output port), "COM3" shows a communication port (summed value input port), and "COM4" shows a communication port (summed value output port).

## Claims

1. A neural processor device comprising:
a first input port (IP) for inputting input data;
an input data output port (COM2) for outputting at least a part of said input data;
a computational means (C) including a summation means (Σ) for calculating a summation of a plural number of weighted input data, and capable of evaluating a result of said summation with respect to whether it is larger or smaller than a threshold value, and for outputting a result of said evaluation as an output data; and
a first output port (OP) outputting said output data;
**characterized by**
a second input port (COM1) independent from said first input port (IP) for inputting at least a part of said input data;
a summation input port (COM3) for inputting additional data directly to said summation means (Σ); and
a second output port (COM4) for outputting said output data.

2. A neural device claimed in claim 1, further comprising a serial/parallel converting means (SP1) for integrating input data input from said first input port (IP) and input data input from said second input port (COM1).

## Patentansprüche

1. Eine neuronale Prozessoreinrichtung, umfassend:
einen ersten Eingabeanschluß (IP) zum Eingeben von Eingabedaten;
einen Eingabedatenausgabeanschluß (COM2) zum Ausgeben von wenigstens einem Teil der Eingabedaten;
eine Berechnungseinrichtung (C), die eine Summationseinrichtung (Σ) zum Berechnen einer Summation einer Mehrzahl von gewichteten Eingabedaten umfaßt und zur Bewertung eines Ergebnisses der Summation, dahingehend, ob es größer oder kleiner als ein Schwellwert ist, vorgesehen ist, und zum Ausgeben eines Ergebnisses der Bewertung in Form von Ausgabedaten; und
einen ersten Ausgabeanschluß (OP) zum Ausgeben der Ausgabedaten;
**gekennzeichnet durch**
einen zweiten Eingabeanschluß (COM1), der vom ersten Eingabeanschluß (IP) unabhängig ist, zum Eingeben wenigstens eines Teils der Eingabedaten;
einen Summationseingabeanschluß (COM3) zum direkten Eingeben zusätzlicher Daten in die Summationseinrichtung (Σ); und
einen zweiten Ausgabeanschluß (COM4) zum Ausgeben der Ausgabedaten.

2. Eine neuronale Einrichtung nach Anspruch 1, weiter umfassend eine Seriell/Parallel-Konvertierungseinrichtung (SP1) zum Integrieren von vom ersten Eingabeanschluß (IP) eingegebenen Eingabedaten und von vom zweiten Eingabeanschluß (COM1) eingegebenen Eingabedaten.

## Revendications

1. Dispositif neuronal de traitement de données, comprenant :
un premier port d'entrée (IP) pour entrer des données ;
un port de sortie de données d'entrée (COM2) pour délivrer au moins une partie desdites données d'entrée ;
un moyen de calcul (C) incluant un moyen de sommation (Σ) pour calculer une sommation d'un nombre plural de données d'entrée pondérées, et apte à évaluer un résultat de ladite sommation eu égard au fait que cette sommation est supérieure ou inférieure à une valeur de seuil, et pour délivrer un résultat de ladite évaluation en tant que données de sortie ; et
un premier port de sortie (OP) pour délivrer lesdites données de sortie ;
caractérisé par
un second port d'entrée (COM1) indépendant dudit premier port d'entrée (IP) pour entrer au moins une partie desdites données d'entrée ;
un port d'entrée de sommation (COM3) pour entrer directement des données additionnelles dans ledit moyen de sommation (Σ) ; et
un second port de sortie (COM4) pour délivrer lesdites données de sortie.

2. Dispositif neuronal selon la revendication 1, comprenant, en outre, un moyen de conversion série/parallèle (SP1) pour intégrer les données d'entrée entrées à partir dudit premier port d'entrée (IP) et les données d'entrée entrées à partir dudit second port d'entrée (COM1).
